# EUROPÄISCHE PATENTSCHRIFT

(11) **EP 0 376 923 B1**
(45) Veröffentlichungstag und Bekanntmachung des Hinweises auf die Patenterteilung: **14.12.1994**
(21) Anmeldenummer: 90100984.5
(22) Anmeldetag: 23.01.1987
(51) Int. Cl.: A01C 17/00

(54) **Verfahren zur Bestimmung der Arbeitsbreite und der Streudichte bei Schleuderstreuern**
Method for determining the operating width and the sowing density of broadcasters
Méthode pour définir le dosage et la largeur d'épandage d'épandeurs centrifuges

(30) Priorität: 13.02.1986 DE 3604449; 10.05.1986 DE 3615817
(43) Veröffentlichungstag der Anmeldung: 04.07.1990
(62) Teilanmeldung aus: 87100963.5
(73) Patentinhaber: Amazonen-Werke H. Dreyer GmbH & Co. KG, D-49205 Hasbergen (DE)
(72) Erfinder: Dreyer, Heinz, Dipl.-Ing.Dr., D-4507 Hasbergen (DE)
(74) Vertreter: Schuster, Thomas, Dipl.-Phys.

(56) Entgegenhaltungen:
- DD-A- 211 051
- DD-A- 214 988
- DE-A- 1 457 844

## Beschreibung

Die Erfindung betrifft ein Meßverfahren und ein Meßgefäß gemäß der Oberbegriffe der Ansprüche 1 und 6. Einderartiges Meßverfahren sowie Meßgefäß ist durch die DE-OS 14 57 844 bekannt. Bei diesem Meßverfahren werden eine Vielzahl von Meßvorrichtungen (im Ausführungsbeispiel sieben Auffangschalen) auf dem Boden im Abstand zueinander aufgestellt. Der Abstand quer zur Fahrtrichtung zwischen den Auffangschalen soll 2 m betragen. Es ist also nach diesem bekannten Meßverfahren bei den heute gebräuchlichen Mrbeits- und Wurfweiten von 36 - 50 m erforderlich, 15 - 25 Auffangschalen aufzustellen. Zur Ermittlung des Streubildes und der Gleichmäßigkeit des ausgebrachten Düngers ist ein Meßblock mit einer Vielzahl der Kammern vorgesehen. Die Anzahl der Kammern in dem Meßblock muß der Anzahl der Meßvorrichtungen (Auffangschalen) entsprechen. Dieses bekannte Meßverfahren und das zugehörige Meßgefäß ist bei den heute gebräuchlichen Arbeits- und Wurfweiten nicht mehr praxisgerecht und vom Landwirt nicht mehr in einer angemessenen Zeit zu handhaben.

Ein weiteres Meßverfahren ist durch die ISO-Norm 5690/1 bzw. in der Broschüre "Spredning of handels gødning" Seite 8 bekannt geworden. Bei diesem Meßverfahren werden quer zur Fahrtrichtung des Schleuderstreuers nebeneinander Auffangbehälter in einer Breite aufgestellt, die etwa der Wurfweite der abgeschleuderten Düngemittelpartikel betrifft. Anschließend fährt der Landwirt mit dem Schleuderstreuer über diese Auffangbehälter hinweg, so daß über die gesamte Wurfbreite, über die die Düngemittelpartikel vom Schleuderstreuer abgeschleudert sind, die Düngemittelpartikel aufgefangen werden. Anschließend muß jede einzelne Düngermenge, die in jedem Auffangbehälter aufgefangen worden ist, einzeln angewogen und in eine Tabelle oder in ein Streudiagramm eingetragen werden und dann muß das Streubild aufgrund dieser ermittelten Werte in langwieriger Arbeit ermittelt werden. Es ist jedoch auch möglich, bei diesem bekannten Meßverfahren im vorgesehenen Arbeitsbreitenabstand noch einmal zurückzufahren über diese Auffangbehälter, so daß auch gleich das überlappte Streubild bzw. die Streumenge beim überlappten Streubild in den Auffangbehältern aufgefangen werden kann. Es ist jedoch in jedem Falle erforderlich, daß eine erhebliche Anzahl von Streubehältern äußerst exakt aufgestellt werden muß, und daß in äußerst langwieriger Weise die in jedem Behälter aufgefangene Düngermenge einzeln ausgewogen und in eine Tabelle eingetragen werden muß, um so beurteilen zu können, ob das Streubild in sich gleichmäßig und die Streustärke gleich ist, so daß der Dünger gleichmäßig über die gesamte Arbeitsbreite auf dem Boden bzw. auf dem Acker ausgebracht werden kann.

Dieses Meßverfahren ist sehr aufwendig und äußerst unpraktikabel, so daß die Landwirte dieses bekannte Meßverfahren nicht anwenden. Bei dem Meßverfahren muß der Acker oder die Wiese völlig eben sein, um genaue bzw. ausreichend genaue Meßwerte zu erhalten. Dieses ist in der Praxis nicht gegeben. Daher wird es selbst von Instituten und Beratern nicht gerne angewendet. In der Praxis beim Landwirt hat es überhaupt keine Bedeutung. Bisher verläßt der Landwirt sich ganz auf die Angaben in der Streutabelle. Da selbst innerhalb einer Düngersorte von Charge zu Charge Unterschiede sind, so daß man durchaus davon sprechen kann, daß die Dünger unterschiedliche, ja sogar gegensätzliche Streueigenschaften haben, entstehen sehr große Streufehler, die der Landwirt, da die bisherigen Meßverfahren für den Landwirt unpraktikabel sind, nicht erkennt.

Der Erfindung liegt die Aufgabe zugrunde, ein Meßverfahren und eine zur Durchführung des Meßverfahrens vorgesehene einfache und einfach zu handhabendes Meßgefäß zu schaffen, so daß auf einfachste Weise der Landwirt die Streugleichmäßigkeit bei jeder gewünschten Arbeitsbreite, überprüfen kann, um so unabhängig bzw. unter Ausschaltung vor allem der unterschiedlichen Beschaffenheit der gleichen Düngersorte mit der vorgesehenen Arbeitsbreite und einer gleichmäßigen Streudichte den Boden oder die Pflanzen mit Dünger bestreuen zu können.

Diese Aufgabe wird in erfindungsgemäßer Weise durch die kennzeichnenden Maßnahmen des Ansprüches 1 und 6 gelöst.

Aufgrund dieser Maßnahme braucht der Landwirt jetzt nur noch die beiden aufgefangenen Mengen miteinander zu vergleichen. Sind diese beiden Mengen im Rahmen eines Toleranzbereiches von beispielsweise + 20% etwa gleich groß, dann kann der Landwirt davon ausgehen, daß der Dünger von seinem Düngerstreuer ausreichend gleichmäßig ausgebracht wird und es so nicht zu der gefürchteten Streifenbildung und somit auch nicht zu Lagergetreide kommt. Somit kann der Landwirt selbst auf dem Feld in äußerst einfacher Weise und in überraschend genauer Weise kostengünstig das erfindungsgemäße Meßverfahren durchführen.

In bevorzugter Weise ist erfindungsgemäß vorgesehen, daß die Meßvorrichtungen an dem Schnittpunkt der Überlappung nebeneinanderliegender Streubereiche bzw. am Ende der Arbeitsbreite angeordnet sind. Hierdurch wird an einem neuralgischen Punkt des Streubereiches die tatsächliche Streustärke in überraschend einfacher Weise gemessen bzw. kontrolliert, da vor allem der Überlappungsbereich den an gibt, ob die Streustärke über die Gesamte Arbeitsbreite gleichmäßig ist. Hierbei kann sogar unverzüglich die tatsächliche Streustärke in kg/ha ermittelt werden, wenn bei zwei nebeneinanderliegenden Streubahnen in Hin- und Herfahrt an dem Meßpunkt die Düngermenge in den Auffangbehältern mit einer definierten Auffangfläche aufgefangen werden.

Um Ungenauigkeiten bei der Ermittlung der richtigen Arbeitsbreite auf dem Feld durch den Landwirt auszuschalten bzw. Unebenheiten auf der Teststrecke auszugleichen, ist erfindungsgemäß vorgesehen, daß in Fahrtrichtung des Schleuderstreuers gesehen mehrere Meßvorrichtungen hintereinanderliegend vorgesehen sind. Hierdurch werden evtl. auftretende Fehler bei der Ermittlung des Meßwertes auf dem Feld durch Schwankungen des Schleuderstreuers ausgeglichen. Somit erhält dieser Meßwert an einer Stelle der Arbeitsbreite eine sehr verlässliche Aussagekraft. Hierzu ist dann vorgesehen, daß eine in Fahrtrichtung gesehen langgestreckte und quer zur Fahrtrichtung schmale Meßvorrichtung vorgesehen ist. Entscheidend ist nämlich, daß über eine relativ lange Strecke in Fahrtrichtung des Schleuderstreuers gesehen der Dünger aufgefangen wird. Denn es kommt, wie schon vor gesagt, darauf an, die Streustärke und die richtige Einstellung des Düngerstreuers dadurch zu überprüfen, daß die auf einem stationären Streuprüfstand ermittelten Meßwerte (nur an einer Stelle mit dem gleichen Abstand won der Schleuderstreuermitte bzw. Arbeitsbreitenmitte) mit dem vom Landwirt ermittelten Wert verglichen werden. Man kann nämlich dann daraus den Schluß ziehen, daß bei der gleichen Düngermenge, die insgesamt vom Schleuderstreuer pro ha ausgebracht wird, wenn an dieser einen vorbestimmten Stelle die Sollmenge an Dünger ausgebracht wird, auch über den übrigen Bereich der Arbeitsbreite der Dünger in der gewünschten Streustärke ausgebracht wird und die Sollwertweite erreicht wird. Es ist also nicht wie bisher erforderlich, über die gesamte Arbeitsbreite den Dünger aufzufangen, um so festzustellen, ob die Streustärke gleichmäßig ist und die Sollwurfweite erreicht wird.

Bei einer Variante des Meßverfahrens ist erfindungsgemäß vorgesehen, daß eine der Meßvorrichtungen in der Mitte des Streubereiches einer Streubahn und die andere Meßvorrichtung vorzugsweise im Schnittpunkt der Überlappung der nebeneinanderliegenden Streubereiche der Streubahnen aufgestellt sind. Infolge dieser Maßnahmen ist es lediglich erforderlich an zwei Stellen des Streubereiches einer Streubahn, d.h. der Bereich, der bei einer Überfahrt des Schleuderstreuers bestreut wird, aufzustellen. Hierbei wird die erste Meßvorrichtung in der Mitte der Streubahn aufgestellt, während die zweite Meßvorrichtung vorzugsweise im Schnittpunkt der Überlappung der nebeneinanderliegenden Streubahnen, d.h. am Ende der effektiven Arbeitsbreite des Schleuderstreuers aufgestellt wird. Bei dieser Meßmethode braucht der Landwirt anschließend nur noch die in den Meßvorrichtungen aufgefangenen Düngermengen miteinander zu vergleichen. Bei einer gleichen Größe bzw. einer geringen Abweichung innerhalb eines Toleranzbereiches ist das Streubild des Düngerstreuers in Ordnung.

Zur Ermittlung der Düngermenge bzw. der Ermittlung, ob das Streubild bzw. der Düngerstreuer korrekt eingestellt ist, ist ein Meßgefäß, mit dessen Hilfe die Korrektheit des Streubildes eines Wurfstreuers, insbesondere eines Zentrifugaldüngerstreuers überprüfbar bzw. feststellbar ist, vorgesehen. Hierbei ist erfindungsgemäß vorgesehen, daß das Meßgefäß zumindest teilweise aus durchrichtigem Material hergestellt ist und zwei unmittelbar nebeneinander sich befindliche Meßkammern aufweist, die durch eine dünne Wand getrennt sind, wobei die eine Meßkammer für die Aufnahme der mit zumindest einem in der Schlepperspur aufgestellten Auffangbehälter bei einem Streuversuch aufgefangenen Düngermenge und die andere Meßkammer für die Aufnahme der mit zumindest einem zwischen den nebeneinanderliegenden Schlepperspuren für die Düngerüberfahrt aufgestellten Auffangbehälter bei dem Streuversuch aufgefangenen Düngermenge vorgesehen ist. Infolge dieser Maßnahme ist es nur noch erforderlich, die beiden in den Meßvorrichtung aufgefangenen Düngermengen in dem erfindungsgemäßen Meßgefäß miteinander zu vergleichen.

Um den Vergleich dieser beiden Düngermengen in dem Meßgefäß für den Landwirt zu vereinfachen, ist erfindungsgemäß vorgesehen, daß das Meßgefäß eine Skala aufweist, wobei die einzelnen Skalenstriche einen Abstand aufweisen, der die zulässige Toleranzabweichung von der Streugenauigkeit angibt.

Weitere Einzelheiten der Erfindung sind den übrigen Unteransprüchen, der Beispielsbeschreibung und den Zeichnungen zu entnehmen. Hierbei zeigen
- Fig. 1: in schematischer Darstellungsweise ein Streubild mit Überlappungszonen und gleichmäßiger Streustärke,
- Fig. 2: ein Streubild mit Überlappungszonen und ungleichmäßiger Streustärke,
- Fig. 3: einen Auffangbehälter in der Ansicht von hinten,
- Fig. 4: den Auffangbehälter gemäß Fig. 13 in der Seitenansicht,
- Fig. 5: den Auffangbehälter gemäß Fig. 13 in vergrößerter Darstellung.
- Fig. 6: in schematischer Darstellungsweise ein Streubild mit Überlappungszonen und gleichmäßiger Streustärke mit der prinzipiellen Anordnung der Meßvorrichtungen und
- Fig. 7: das Meßgefäß, mit dem die mit den Meßvorrichtungen gemäß Fig. 6 aufgefangenen Düngermengen miteinander verglichen werden.

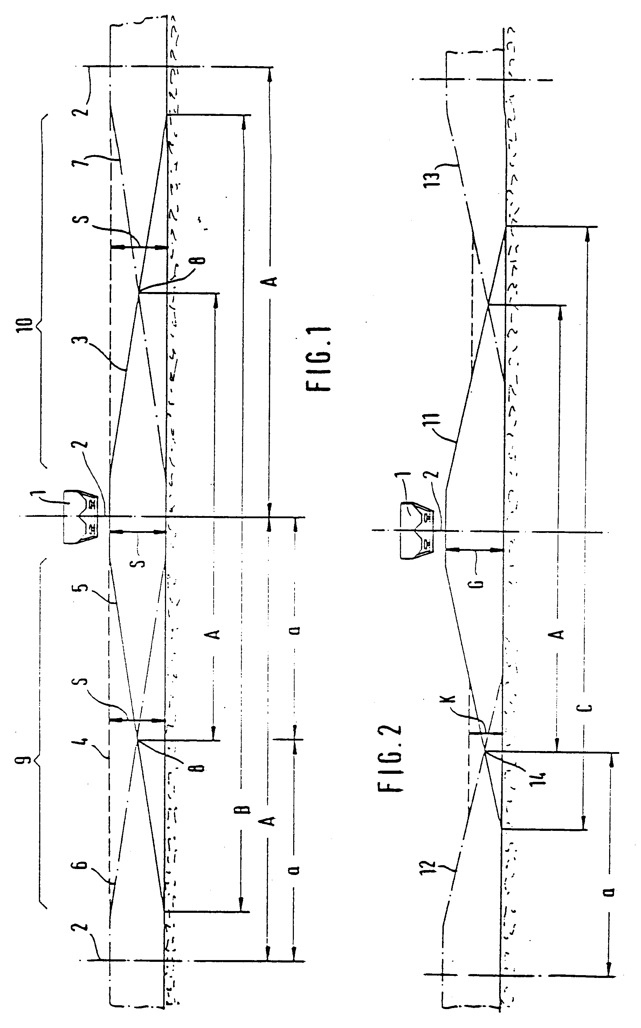

Die Fig. 1 zeigt ein Streubild mit einer gleichmäßigen Streustärke S über die gesamte Arbeitsbreite A. Die Düngemittelpartikel werden von dem Schleuderstreuer 1 über die Streubreite B abgeschleudert. Und zwar in der Weise, daß die Düngemittelpartikel von der Streuermitte 2 bzw. Arbeitsbreitenmitte 2 seitlich nach außen in abnehmender Streustärke, wie dieses durch die Linie 3 angedeutet ist, über die gesamte Streubreite B abgeschleudert werden. Durch Überlappen nebeneinanderliegender Streubahnen, deren Arbeitsbreitenmitte 2 in einem Abstand A, der der Arbeitsbreite entspricht von der jeweils benachbarten Streubahnmitte 2 liegt, entsteht auch in den abfallenden Streustärkenbereichen jedes einzelnen Streufächers die Gesamtstreustärke S, wie dieses mit den gestrichelten Linien 4 angedeutet ist. Seitlich neben dem mittleren Streufächer 5, der mit durchzogenen Linien dargestellt ist, liegen jeweils die unmittelbar benachbarten Streufächer 6 und 7, die mit strichpunktierten Linien dargestellt sind. Am Ende der Arbeitsbreite A befindet sich der Schnittpunkt 8 der Überlappungszonen 9 und 10. Der Schnittpunkt 8 befindet sich immer im halben Abstand A, der in der Fig. 1 als a bezeichnet ist von der Arbeitsbreitenmitte 2. Wenn durch das Aneinanderreihen nebeneinanderliegender Streubahnen, deren Arbeitsbreitenmitte 2 sich jeweils im Abstand der Arbeitsbreite A voneinander befinden, die gleichmäßige Streustärke S entsteht, ist der Schleuderstreuer 1 auf die auszubringende Düngersorte richtig eingestellt.

Die Fig. 2 zeigt ein Streubild mit einer ungleichmäßigen Streustärke. Der Schleuderstreuer 1 in der Fig. 2 ist auf die auszubringende Düngersorte falsch eingestellt. Die Arbeitsbreite A wird durch den Fahrgassenabstand vorgegeben und muß jeweils eingehalten werden. Die Düngemittelpartikel werden von dem Schleuderstreuer 1 in der Fig. 2 über die Streubreite C beidseitig von der Mitte des Schleuderstreuers 1 bzw. der Arbeitsbreitenmitte 2 über den Streubereich C abgeschleudert. Die Streustärke des mit durchzogenen Linien dargestellten Streubildes 11 sowie die Streubilder 12 und 13 der nächstliegenden Streubahnen, die mit strichpunktierten Linien dargestellt sind, fallen nach außen in Richtung des Endes der Streubreite C ab. Durch Überlappen der nebeneinanderliegenden Streubilder 11 und 12 sowie 11 und 13 entsteht im Schnittpunkt 14 der Streubilder die zu kleine Streustärke K während sich in der Nähe der Arbeitsbreitenmitte 2 die zu große Streustärke G ergibt. Dies bedeutet also, daß der Schleuderstreuer 1 auf die auszubringende Düngersorte nicht richtig eingestellt ist und die Düngemittelpartikel aufgrund ihrer Beschaffenheit nicht weit genug nach außen abgeschleudert werden. Hierdurch ergibt sich eine zu große Streustärke G in der Arbeitsbreitenmitte 2 und eine zu kleine Streustärke K am Ende der Arbeitsbreite A im Schnittpunkt 14. Bei dem Beispiel gemäß Fig. 2 fällt die Streustärke also von der Arbeitsbreitenmitte 2 in Richtung des Endes der Arbeitsbreitenmitte 2 ab. Dies bedeutet also, der Schleuderstreuer 1 muß anders eingestellt werden, damit die Düngemittelpartikel weiter von dem Schleuderstreuer 1 nach außen geworfen werden.

Wird der Dünger entsprechend des Beispieles gemäß Fig. 2 auf Getreideflächen ausgestreut, so kommt es zu der berüchtigten Streifenbildung, also zu überdüngten und unterdüngten Getreidestreifen.

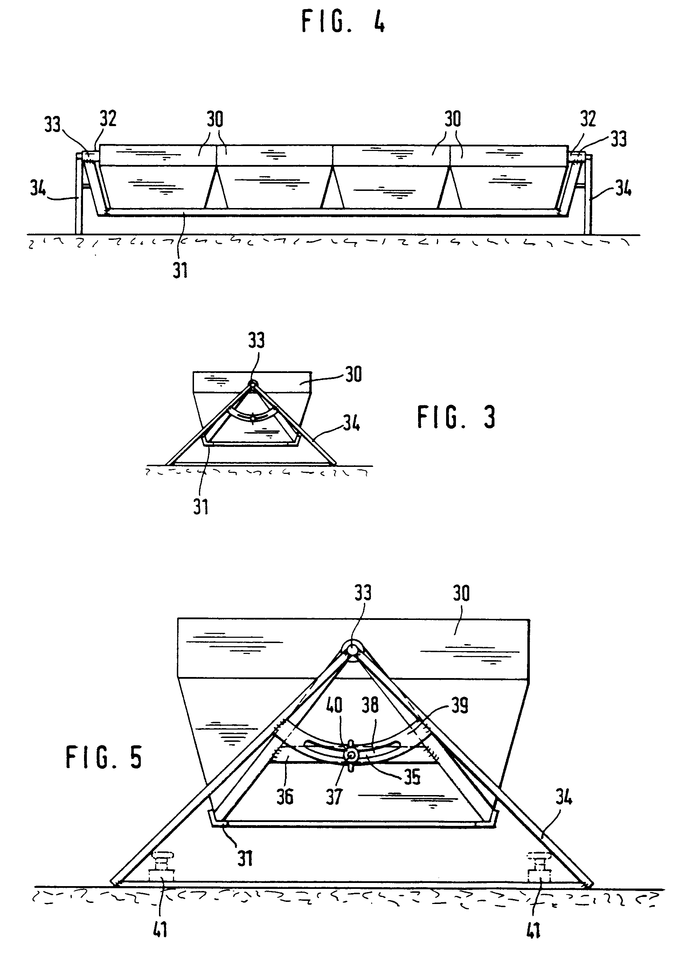

In den Fig. 3 bis 5 ist eine erfindungsgemäße Meßvorrichtung dargestellt. Diese Meßvorrichtung weist vier einzelne Auffangbehälter 30 auf. Diese Auffangbehälter 30 sind in dem Pendelrahmen 31 hintereinander aufgestellt. Der Pendelrahmen 31 weist an seinen beiden Stirnseiten 32 jeweils das Gelenk 33 auf, mit dem der Pendelrahmen mit dem Abstellrahmen 34 verbunden ist. Hierdurch ist es möglich, daß sich die Auffangbehälter 30 automatisch durch ihre pendelnde Aufhängung so ausrichten, so daß ihre Oberkanten horizontal ausgerichtet sind. Um ein Schwanken der Auffangbehälter 30 während des Meßvorganges zu vermeiden, ist zwischen dem Abstellrahmen 34 und dem Pendelrahmen 31 die Feststellvorrichtung 35 angeordnet. Diese Feststellvorrichtung 35 besteht aus der an dem Pendelrahmen 31 angeordneten Strebe mit dem Klemmbolzen 37. Dieser Klemmbolzen 37 ragt in ein Langloch 38 der an dem Astellrahmen 34 angeordneten Strebe 39. Auf dem Klemmbolzen 37 wird von außen die Klemmutter 40 aufgesetzt, so daß hierdurch die Stellung des Pendelrahmens 31 und somit der Auffangbehälter 30 gegenüber dem Abstellrahmen 34 arretiert werden kann. Des weiteren können am unteren Ende des Abstellrahmens 34 die mit strichpunktierten Linien angedeuteten Ausgleichschrauben 41 angeordnet sein, über die zu große Bodenunebenheiten ausgeglichen werden können, so daß die Abstellrahmen 34 fest auf dem Boden aufstehen. Außerdem ist es möglich, daß an dem Abstellrahmen 34 nicht dargestellte Verlängerungsstangen angebracht werden können, so daß beispielsweise für die Getreidespätdüngung die Auffangbehälter 30 in einem Abstand zur Bodenoberfläche relativ hoch und zwar zumindest bis auf Höhe der Getreidespitze angeordnet werden können, um so auch für die Getreidespätdüngung die richtige Einstellung des Schleuderstreuers überprüfen zu können.
weiteren können am unteren Ende des Abstellrahmens 34 die mit strichpunktierten Linien angedeuteten Ausgleichschrauben 41 angeordnet sein, über die zu große Bodenunebenheiten ausgeglichen werden können, so daß die Abstellrahmen 34 fest auf dem Boden aufstehen. Außerdem ist es möglich, daß an dem Abstellrahmen 34 nicht dargestellte Verlängerungsstangen angebracht werden können, so daß beispielsweise für die Getreidespätdüngung die Auffangbehälter 30 in einem Abstand zur Bodenoberfläche relativ hoch und zwar zumindest bis auf Höhe der Getreidespitze angeordnet werden können, um so auch für die Getreidespätdüngung die richtige Einstellung des Schleuderstreuers überprüfen zu können.

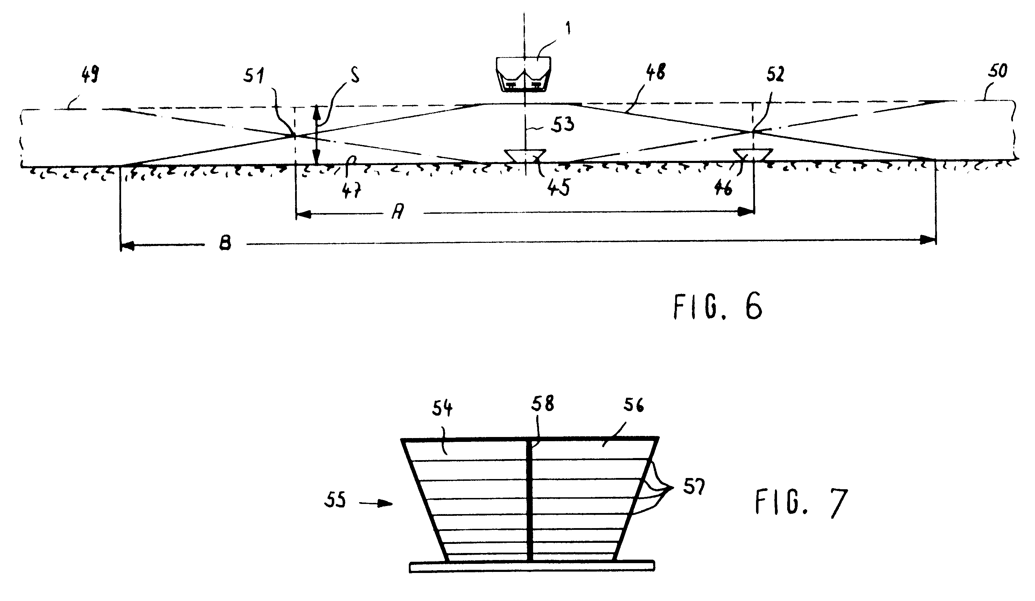

Bei dem erfindungsgemäßen Meßverfahren gemäß Fig. 6 sind die beiden Meßvorrichtungen 45 und 46 auf dem Feld 47 stationär auf dem Boden aufgestellt. Der Schleuderstreuer 1 streut bei einer Streubahn 48 über die gesamte Streubreite B den Dünger ab. Die Streubreite B entspricht dem Streubereich des Düngerstreuers. Durch das Überlappen der nebeneinanderliegenden Streubahnen 48, 49, 50 entsteht ein Streubild mit der gleichmäßigen Streustärke S. Die Streubahnen 48 und 49 schneiden sich im Schnittpunkt 51, während sich die Streubahen 48 und 50 im Schnittpunkt 52 schneiden. Die Arbeitsbreite A entspricht dem Abstand der Streubahnabstände bzw. den Abständen der Schnittpunkt der einzeln nebeneinanderliegenden Streubahnen zueinander. Zur Überprüfung der Gleichmäßigkeit des Streubildes wird gemäß Fig. 6 in der Streubahnmitte 53 bzw. in der Mitte der Schlepperspur des den Schleuderstreuer tragenden Schleppers die Meßvorrichtung 45, die mehrere in Fahrtrichtung hintereinander aufgestellte Auffangbehälter aufweist, aufgestellt. Weiterhin wird im Schnittpunkt 52 bzw. am Ende der Arbeitsbreite A die aus mehreren in Fahrtrichtung hintereinander aufgestellten Auffangbehältern bestehende Meßvorrichtung 46 aufgestellt. Nach dem Aufstellen der Meßvorrichtung 45 und 46 wird mit dem Schleuderstreuer 1 der Dünger auf dem Feld 47 verteilt und beim "Überfahren" der Meßvorrichtungen 45 und 46 wird von diesen an den vorgesehenen Stelle der Dünger aufgefangen. Um ein aussagekräftiges Ergebnis zu erhalten, müssen soviel nebeneinanderliegende Streubahnen 48,49 und/oder 50 gestreut werden, daß dann von der nächstfolgenden Streubahn kein Dünger mehr in die Auffangbehälter der Meßvorrichtung 45 und 46 fällt. Dann wird der Streuvorgang unterbrochen und der Landwirt gibt nun die sich in den Auffangbehälter der Meßvorrichtung 45 aufgefangene Düngermenge in die Meßkammer 54 des Meßgefäßes 55 gemäß Fig. 7. Die Düngermenge, die von den Auffangbehältern der Meßvorrichtung 46 aufgefangen worden ist, wird in die Meßkammer 56 des Meßgefässes 55 gefüllt. Diese beiden bei dem Streuversuch ermittelten Düngermengen werden in dem Meßgefäß 55 miteinander verglichen. Das Meßgefäßt 55 ist aus durchsichtigem Material hergestellt. Weiterhin weist das Meßgefäß 55 im Bereich der Meßkammern 54 und 56 die Skalenstriche 57 auf. Die Skalenstriche 57 haben einen Abstand voneinander, der der zulässigen Toleranzabweichung von der Streugenauigkeit entspricht. Mit Hilfe dieser Skalenstriche können die beiden Düngermengen miteinander verglichen werden und es kann durch die Skalenstriche sehr einfache festgestellt werden, ob die Größe der Düngermengen gleich ist bzw. ob die Größe der Abweichung der Düngermengen voneinander innerhalb des zulässigen Toleranzbereiches liegt. Es sei noch erwähnt, daß die durch eine dünne Trennwand 58 voneinander getrennten Meßkammern 54 und 56 eine gleiche Form und Größe aufweisen.

## Patentansprüche

1. Meßverfahren zur Bestimmung der Streudichte bei Schleuderstreuern mittels Meßvorrichtungen, die sich in dem Bereich, über den die Düngemittelpartikel abgeschleudert werden, befinden, dadurch gekennzeichnet, daß an zwei Stellen des Streubereiches die Meßvorrichtungen (45,46) auf dem Boden angeordnet sind, und daß nach dem Streuen über diese Meßvorrichtungen (45,46) nach einsatzgemäßen Verhältnissen die zwei von den Meßvorrichtungen (45,46) aufgefangenen Düngermengen in einem aus zwei Meßkammnern (54, 56) bestehenden Meßgefäß (55), das zumindest teilweise aus durchsichtigem Material hergestellt ist, miteinander verglichen werden.

2. Meßverfahren nach Anspruch 1, dadurch gekennzeichnet, daß die Meßvorrichtungen an dem Schnittpunkt (8) der Überlappung nebeneinander liegender Streubereiche und am Ende der Arbeitsbreite (A) angeordnet sind.

3. Meßverfahren nach Anspruch 1, dadurch gekennzeichnet, daß in Fahrtrichtung des Schleuderstreuers (1) gesehen mehrere Meßvorrichtungen hintereinander liegend vorgesehen sind.

4. Meßverfahren nach Anspruch 1, dadurch gekennzeichnet, daß eine in Fahrtrichtung gesehen langgestreckte und quer zur Fahrtrichtung schmalere Meßvorrichtung vorgesehen ist.

5. Meßverfahren nach Anspruch 1 oder 2, dadurch gekennzeichnet, daß eine der Meßvorrichtungen (45) in der Mitte (53) des Streubereiches einer Streubahn (48) und die andere Meßvorrichtung (46) im Schnittpunkt (52) der Überlappung der nebeneinanderliegenden Streubereiche der Streubahnen (48,50) aufgestellt sind.

6. Meßgefäß mit dessen Hilfe die Korrektheit des Streubildes eines Schleuderstreuers, insbesondere eines Zentrifugaldüngerstreuers, überprüfbar bzw. feststellbar ist, dadurch gekennzeichnet, daß das Meßgefäß (55) zumindest teilweise aus durchsichtigem Material hergestellt ist und zwei unmittelbar nebeneinander sich befindliche Meßkammern (54,55) aufweist, die durch eine dünne Wand (58) getrennt sind, wobei die eine Meßkammer (54) für die Aufnahme der mit zumindest einem in der Schlepperspur aufgestellten Auffangbehälter (45) bei einem Streuversuch aufgefangenen Düngermenge und die andere Meßkammer (56) für die Aufnahme der mit zumindest einem zwischen den nebeneinanderliegenden Schlepperspuren für die Düngerüberfahrt aufgestellten Auffangbehälter (46) bei dem Streuversuch aufgefangenen Düngermenge vorgesehen ist.

7. Meßgefäß nach Anspruch 6, dadurch gekennzeichnet, daß das Meßgefäß (55) eine Skala aufweist, wobei die einzelnen Skalenstriche (57) einen Abstand aufweisen, der die zulässige Toleranzabweichung von der Streugenauigkeit angibt.

8. Meßgefäß nach Anspruch 7, dadurch gekennzeichnet, daß die Abstände der Skalenstriche (57) voneinander einer 20%igen Toleranz entsprechen.

## Claims

1. Measuring method for determining the broadcasting density for centrifugal broadcasters by means of measuring devices, which are situated in the region over which particles of fertiliser are centrifuged, characterised in that, at two locations in the broadcasting region, the measuring devices (45, 46) are disposed on the ground, and in that, after the broadcasting process over these measuring devices, the two quantities of fertiliser picked-up by the measuring devices (45, 46) are compared with each other in a measuring vessel (55), according to the conditions of use, said measuring vessel comprising two measuring chambers (54, 46) and being at least partially produced from transparent material.

2. Measuring method according to claim 1, characterised in that the measuring devices are disposed at the point of intersection (8) of the overlapping of adjacently situated broadcasting regions and at the end of the working width (A).

3. Measuring method according to claim 1, characterised in that a plurality of measuring devices are provided lying behind one another, when viewed with respect to the direction of travel of the centrifugal broadcaster (1).

4. Measuring method according to claim 1, characterised in that a measuring device is provided, which is elongate when viewed with respect to the direction of travel and is narrower transversely relative to the direction of travel.

5. Measuring method according to claim 1 or 2, characterised in that one of the measuring devices (45) is positioned in the centre (53) of the broadcasting region of a broadcasting path (48), and the other measuring device (46) is positioned at the point of intersection (52) of the overlapping of the adjacently situated broadcasting regions of the broadcasting paths (48, 50).

6. Measuring vessel, whereby the accuracy of the broadcasting pattern of a centrifugal broadcaster, more especially a centrifugal fertiliser broadcaster, can be examined, or respectively detected, characterised in that the measuring vessel (55) is at least partially produced from transparent material and comprises two measuring chambers (54, 56), which are situated immediately adjacent each other and are separated by a thin wall (58), one measuring chamber (54) being provided for receiving the quantity of fertiliser which has been picked-up in a broadcasting test by at least one collecting vessel (45), which is positioned in the track of the tractor, and the other measuring chamber (56) being provided for receiving the quantity of fertiliser which has been picked-up in the broadcasting test by at least one collecting vessel (46) positioned between the adjacently situated tracks of the tractor for the transfer of fertiliser.

7. Measuring vessel according to claim 6, characterised in that the measuring vessel (55) has a graduation scale, the individual graduation lines (57) having a spacing therebetween which denotes the permissible tolerance deviation from the broadcasting accuracy.

8. Measuring vessel according to claim 7, characterised in that the spacings between the graduation lines (57) correspond to a 20% tolerance.

## Revendications

1. Procédé de mesure pour déterminer la densité d'épandage d'un épandeur d'engrais à l'aide de dispositifs de mesure qui se trouvent dans la zone dans laquelle sont éjectées les particules d'engrais, procédé caractérisé en ce qu'on place les dispositifs de mesure (45, 46) sur le sol en deux endroits de la zone d'épandage et ce qu'après l'épandage, on compare les quantités d'engrais recueillies par ces dispositifs de mesure (45, 46) en fonction des conditions de mise en oeuvre, dans un récipient de mesure (55) formé de deux chambres de mesure (54, 56), ce récipient étant au moins partiellement en matière transparente.

2. Procédé de mesure selon la revendication 1, caractérisé en ce que les dispositifs de mesure sont prévus dans les zones d'épandage juxtaposées au niveau du chevauchement et à l'extrémité de la largeur de travail (A).

3. Procédé de mesure selon la revendication 1, caractérisé en ce que plusieurs dispositifs de mesure sont prévus couchés les uns derrière les autres dans la direction de déplacement de l'épandeur centrifuge 1.

4. Procédé de mesure selon la revendication 1, caractérisé en ce qu'on prévoit un dispositif de mesure allongé dans la direction de déplacement et plus étroite dans la direction transversale à la direction de déplacement.

5. Procédé de mesure selon la revendication 1 ou 2, caractérisé en ce que l'un des dispositifs de mesure (45) est disposé au milieu (53) de la zone d'épandage d'une bande d'épandage (48) et l'autre dispositif de mesure (46) est prévu au point d'intersection (52) du chevauchement des zones d'épandage voisines des bandes d'épandage (48, 50).

6. Récipient de mesure pour contrôler ou déterminer si l'image d'épandage d'un épandeur est correcte notamment dans les épandeurs centrifuges d'engrais, caractérisé en ce que le récipient de mesure, qui est au moins en partie en matière transparente, comporte deux chambres de mesure (54, 55) juxtaposées, séparées par une cloison mince (58), une chambre de mesure (54) étant prévue pour recevoir la quantité d'engrais recueillie au cours d'un essai d'épandage par un réceptacle (45) placé dans la trace du tracteur, et l'autre chambre (56) étant prévue pour recevoir la quantité d'engrais recueillie au cours d'un essai d'épandage par le réceptacle (46) placé entre les traces de tracteur voisines pour un passage d'épandage.

7. Récipient de mesure selon la revendication 6, caractérisé en ce que le récipient (55) comporte une échelle, les différentes graduations (57) de l'échelle étant distantes d'une distance correspondant à la déviation de tolérance autorisée pour la précision d'épandage.

8. Récipient de mesure selon la revendication 7, caractérisé en ce que les intervalles des graduations (57) correspondent à une tolérance de 20 %.
